# EUROPEAN PATENT APPLICATION

(11) **EP 4 477 444 A1**
(43) Date of publication of application: **18.12.2024**
(21) Application number: 24181460.7
(22) Date of filing: 11.06.2024
(51) Int. Cl.: B60K 17/22, B60K 17/344, F16H 57/04, F16H 47/04, F16H 57/021, F16H 37/04

(54) **WORK VEHICLE**

(30) Priority: 16.06.2023 JP 2023099472
(71) Applicant: Kubota Corporation, Osaka-shi, Osaka 556-8601 (JP)
(72) Inventor: TANAKA, Tomoyuki, Sakai-shi, Osaka 5900908 (JP); MATSUO, Takahiro, Sakai-shi, Osaka 5900908 (JP); AIKAWA, Hiroyuki, Sakai-shi, Osaka 5900908 (JP); HAYAMI, Atsuro, Sakai-shi, Osaka 5900908 (JP); KITAMURA, Sota, Sakai-shi, Osaka 5900908 (JP); HOKEGUCHI, Takuma, Sakai-shi, Osaka 5900908 (JP)
(74) Representative: Cabinet Beau de Loménie

(57) **Abstract**

A transmission case (3) contains a first power transmission shaft (31), a second power transmission shaft (32) below the first power transmission shaft (31), a first power transmission gear (71) attached to the first power transmission shaft (31), and a second power transmission gear (72) attached to an end of the second power transmission shaft (32) and meshing with the first power transmission gear (71) at a meshing portion. A first cover (81) is included that covers (i) a portion of the second power transmission gear (72) which portion is on a first side opposite to a second side toward which the second power transmission shaft (32) protrudes and (ii) the end of the second power transmission shaft (32). A second cover (82) is included that covers a radially outward portion of the second power transmission gear (72) except for the meshing portion.

## Description

### Background of the invention

### Field of the invention

The present invention relates to a work vehicle including a power transmission system configured to transmit motive power from a motive power source to travel devices such as travel wheels.

### Description of the related art

Patent Literature 1 (JP 2019-95058 A) discloses as an example work vehicle a tractor including a transmission case that contains a power transmission system configured to transmit motive power to travel devices and that stores lubricating oil.

The tractor includes a power transmission system including a first power transmission shaft and a second power transmission shaft below the first power transmission shaft, and also includes a first power transmission gear attached to the first power transmission shaft and a second power transmission gear attached to an end of the second power transmission shaft and meshing with the first power transmission gear.

The transmission case stores lubricating oil, and contains a first power transmission shaft and a second power transmission shaft below the first power transmission shaft. In this case, the second power transmission shaft and the second power transmission gear are often under the surface of the lubricating oil.

With the second power transmission shaft and the second power transmission gear under the surface of lubricating oil, rotating the second power transmission shaft and the second power transmission gear causes the second power transmission gear to stir the lubricating oil. This may increase the stirring resistance of the lubricating oil, and thereby cause a greater motive power loss.

### Summary of Invention

The present invention has an object of providing a work vehicle capable of preventing a power transmission gear from stirring lubricating oil to increase its stirring resistance, thereby reducing the motive power loss caused by the stirring resistance.

A work vehicle of the present invention includes: a motive power source; a travel device; and a first power transmission shaft and a second power transmission shaft each configured to transmit motive power from the motive power source to the at least one travel device; a transmission case containing the first power transmission shaft and the second power transmission shaft and configured to store lubricating oil, the second power transmission shaft being below the first power transmission shaft; a first power transmission gear disposed in the transmission case and attached to the first power transmission shaft; a second power transmission gear disposed in the transmission case, attached to an end of the second power transmission shaft, and meshing with the first power transmission gear at a meshing portion; a first cover covering (i) a portion of the second power transmission gear which portion is on a first side opposite to a second side toward which the second power transmission shaft protrudes and (ii) the end of the second power transmission shaft; and a second cover covering a radially outward portion of the second power transmission gear except for the meshing portion.

Suppose that a transmission case contains a first power transmission shaft, a second power transmission shaft below the first power transmission shaft, a first power transmission gear attached to the first power transmission shaft, and a second power transmission gear attached to an end of the second power transmission shaft and meshing with the first power transmission gear. In this case, lubricating oil covers a first lateral side surface of the second power transmission gear and the end of the second power transmission shaft.

The above work vehicle is configured such that in the above state, the first and second covers cover the first lateral side surface of the second power transmission gear, the outer peripheral portion of the second power transmission gear (except for a portion at which the first and second power transmission gears mesh with each other), and the end of the second power transmission shaft. This reduces that portion of the second power transmission gear which is covered by lubricating oil.

With the above configuration, rotating the second power transmission gear and causing the second power transmission gear to stir lubricating oil leads to reduced spread of the stirring throughout the transmission case. This inhibits an increase in the stirring resistance of the lubricating oil, which in turn allows a reduced motive power loss and increases the efficiency of transmitting motive power to the travel devices.

The work vehicle may preferably further include: a first bearing disposed on the first cover and holding the second power transmission shaft in such a manner that the second power transmission shaft is rotatable.

With the above configuration, the first cover doubles as a holder of the first bearing, with the result of a simplified structure.

The work vehicle may preferably further include: a third cover covering a portion of the second power transmission gear which portion is on the second side and including a shaft extending section through which the second power transmission shaft extends.

The above work vehicle is not only configured such that the first and second covers cover the first lateral side surface of the second power transmission gear, the outer peripheral portion of the second power transmission gear (except for a portion at which the first and second power transmission gears mesh with each other), and the end of the second power transmission shaft, but also configured such that the third cover covers a second lateral side surface of the second power transmission gear.

This further reduces that portion of the second power transmission gear which is covered by lubricating oil. This in turn further inhibits an increase in the stirring resistance of the lubricating oil, allows a further reduced motive power loss, and further increases the efficiency of transmitting motive power to the travel devices.

With the above configuration, the second cover does not cover the portion at which the first and second power transmission gears mesh with each other, and the third cover includes a shaft extending section through which the second power transmission shaft extends. This prevents lack of lubricating oil at the meshing portion.

The work vehicle may preferably further include: a second bearing disposed on the third cover and holding the second power transmission shaft in such a manner that the second power transmission shaft is rotatable.

With the above configuration, the third cover doubles as a holder of the second bearing, with the result of a simplified structure.

The work vehicle may preferably further include: a holder holding the first power transmission shaft in such a manner that the first power transmission shaft is rotatable, wherein the first cover, the second cover, and the third cover are disposed on the holder.

The above configuration allows the holder to be integral with the first to third covers, with the result of a simplified structure.

The work vehicle may preferably be further configured such that the at least one travel device includes: a pair of left and right front wheels; and a pair of left and right rear wheels or a pair of left and right crawler travel devices, the work vehicle further includes: a rear differential device configured to transmit motive power to the rear wheels or the crawler travel devices, the first power transmission shaft is a differential drive shaft disposed in a front-rear direction and configured to transmit motive power to the rear differential device, and the second power transmission shaft is a front-wheel power transmission shaft disposed in the front-rear direction and configured to transmit the motive power of the differential drive shaft from the first power transmission gear and the second power transmission gear to the front wheels.

The above configuration allows motive power to be transmitted from the differential drive shaft (that is, the first power transmission shaft) through the rear differential device to the rear wheels (or the crawler travel devices). The above configuration also allows the motive power received by the differential drive shaft to be transmitted from the first and second power transmission gears through the front-wheel power transmission shaft (that is, the second power transmission shaft) to the front wheels.

With the above configuration, the front-wheel power transmission shaft is often disposed at a lower portion of the space inside the transmission case to be apart from components such as a transmission device in the transmission case. This allows easy placement of the first and second covers.

The work vehicle may preferably include: an intake section disposed in the transmission case and on the first side of the first cover and configured to take in the lubricating oil and supply the lubricating oil to a hydraulic pump.

Work vehicles are often configured to supply lubricating oil in the transmission case to a hydraulic pump as operating oil and supply the operating oil of the hydraulic pump to, for example, a hydraulic device.

With the above configuration, while rotating the second power transmission gear does cause air bubbles to enter lubricating oil, the air bubbles unlikely move toward the intake section due to the first cover. This inhibits air bubbles from entering the hydraulic pump through the intake section.

The work vehicle may preferably be further configured such that the intake section is below respective lower ends of the first cover and the second cover.

With the above configuration, even if rotating the second power transmission gear causes air bubbles to enter lubricating oil, the air bubbles unlikely move downward toward the intake section relative to the first cover, since the intake section is below the respective lower ends of the first and second covers. This further inhibits air bubbles from entering the hydraulic pump through the intake section.

The work vehicle may preferably include: a downward depression in a bottom portion of the transmission case, wherein the intake section is in the depression.

With the above configuration, air bubbles more unlikely move downward toward the intake section, since the intake section is further below. This further inhibits air bubbles from entering the hydraulic pump through the intake section.

### Brief Description of Drawings

Fig. 1 is a left side view of a tractor.
Fig. 2 is a diagram schematically illustrating the inside of a transmission case.
Fig. 3 is a graph that shows the relationship between the rotation speed of an output shaft and the gear position of a continuously variable transmission device.
Fig. 4 is a cross-sectional left side view of a holder and its surroundings in a transmission case.
Fig. 5 is a cross-sectional left side view of a holder.
Fig. 6 is a cross-sectional rear view of a holder and its surroundings in a transmission case.
Fig. 7 is a cross-sectional front view of a holder and its surroundings in a transmission case.
Fig. 8 is an exploded perspective view of a holder.

### Description of Embodiments

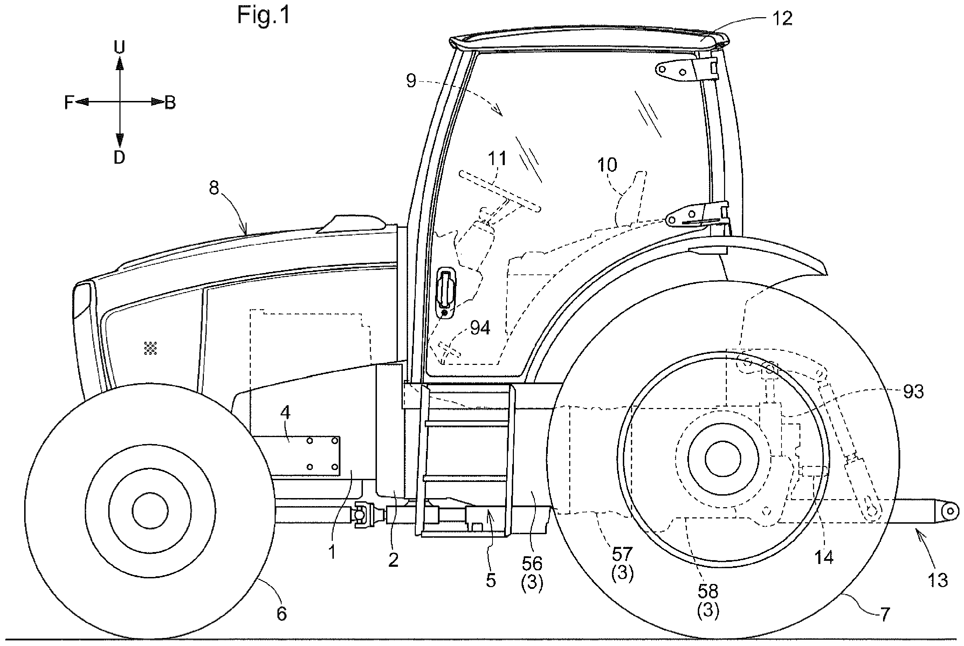

Figs. 1 to 8 are each related to a tractor as an example work vehicle. The drawings show "F" to indicate the front side, "B" to indicate the back side, "U" to indicate the upward side, "D" to indicate the downward side, "L" to indicate the left side, and "R" to indicate the right side.

### Overall Configuration of Tractor

As illustrated in Fig. 1, the tractor includes a body 5, a pair of left and right front wheels 6 (which is an example of the "at least one travel device") provided for the body 5, and a pair of left and right rear wheels 7 (which is an example of the "at least one travel device") provided for the body 5. The body 5 is supported by the front and rear wheels 6 and 7. The body 5 is provided with components such as an engine 1 (which is an example of the "motive power source"), a flywheel housing 2 coupled to a back portion of the engine 1, a transmission case 3 coupled to a back portion of the flywheel housing 2, and a front frame 4 coupled to a front portion of the engine 1.

The front wheels 6 are disposed on the front frame 4, whereas the rear wheels 7 are disposed on a back portion of the transmission case 3. The tractor includes a hood 8 configured to cover the engine 1 and a driver section 9 disposed on the body 5 and including a driver's seat 10 and a steering wheel 11 for turning the front wheels 6. The tractor also includes a cabin 12 enclosing the driver section 9.

The tractor includes a link mechanism 13 and a power take-off (PTO) shaft 14. The link mechanism 13 is disposed at a back portion of the body 5 and linkable with any of various work devices (not illustrated in the drawings). The PTO shaft 14 is disposed at a back portion of the transmission case 3 and configured to transmit motive power to the work device.

### Configuration of Transmission Case

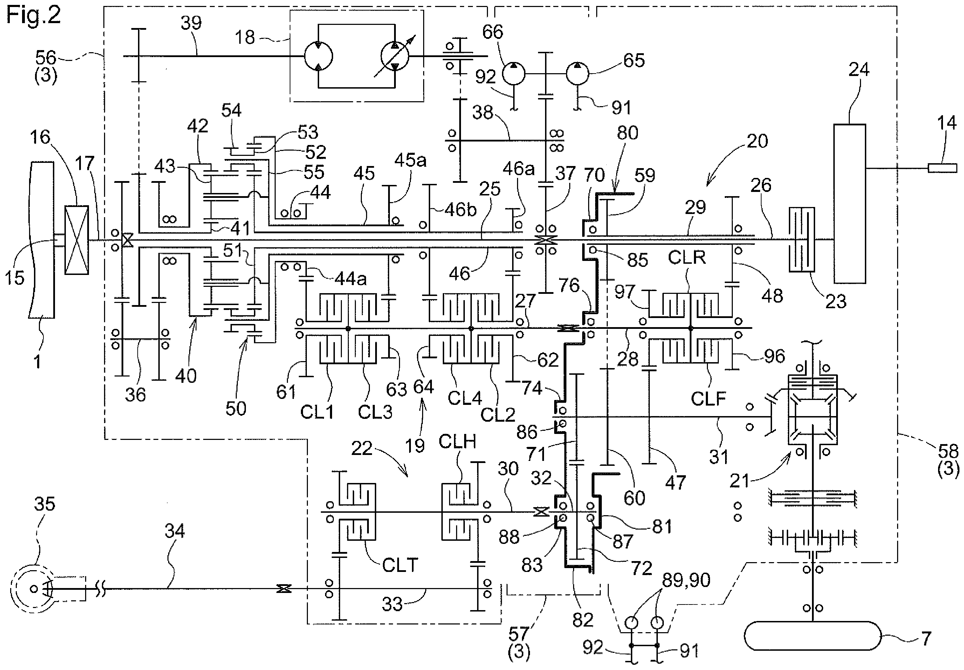

As illustrated in Figs. 1 and 2, the transmission case 3 includes a front compartment 56, an intermediate compartment 57, and a back compartment 58 bolted to one another. The transmission case 3 stores lubricating oil.

As illustrated in Fig. 2, the transmission case 3 contains components such as a first planetary device 40, a second planetary device 50, a continuously variable transmission device 18, a power transmission device 19, a forward/rearward travel switching device 20, a rear-wheel differential device 21 (which is an example of the "rear differential device"), a front-wheel transmission device 22, a PTO clutch 23, and a PTO transmission device 24.

The engine 1 transmits motive power from its output shaft 15 through a damper disc 16 to the input shaft 17 of the transmission case 3. The motive power is then transmitted from the input shaft 17 to a power transmission shaft 25 and a power transmission shaft 26. The power transmission shaft 26 transmits the motive power to the PTO clutch 23. The motive power is varied by the PTO transmission device 24 and transmitted to the PTO shaft 14.

The engine 1 transmits motive power from its output shaft 15 through the damper disc 16 to the first planetary device 40, the second planetary device 50, the continuously variable transmission device 18, and the power transmission device 19. The motive power is varied and transmitted to an output shaft 27.

The motive power of the output shaft 27 is transmitted from a power transmission shaft 28 to the forward/rearward travel switching device 20. The motive power of the forward/rearward travel switching device 20 is transmitted from a cylindrical power transmission shaft 29, which is rotatably attached to the power transmission shaft 26, to a power transmission shaft 31 (which is an example of the "first power transmission shaft" and "differential drive shaft"), to the rear-wheel differential device 21, and to the rear wheels 7.

The motive power from the power transmission shaft 31 is transmitted to a power transmission shaft 32 (which is an example of the "second power transmission shaft" and "front-wheel power transmission shaft"), and from the power transmission shaft 32 through a power transmission shaft 30 to the front-wheel transmission device 22. The motive power of the front-wheel transmission device 22 is transmitted from a front-wheel output shaft 33 through a power transmission shaft 34 to a front-wheel differential device 35 and to the front wheels 6.

The work vehicle configured as above includes: a motive power source (that is, the engine 1); at least one travel device (that is, the front and rear wheels 6 and 7); a first power transmission shaft (that is, the power transmission shaft 31) and a second power transmission shaft (that is, the power transmission shaft 32) each configured to transmit motive power from the motive power source (that is, the engine 1) to the at least one travel device (that is, the front and rear wheels 6 and 7); and a transmission case 3 containing the first power transmission shaft (that is, the power transmission shaft 31) and the second power transmission shaft (that is, the second power transmission shaft 32) and configured to store lubricating oil.

The above work vehicle may be further configured such that the at least one travel device (that is, the front and rear wheels 6 and 7) includes: a pair of left and right front wheels 6; and a pair of left and right rear wheels 7 or a pair of left and right crawler travel devices, and the work vehicle further includes: a rear differential device (that is, the rear-wheel differential device 21) configured to transmit motive power to the rear wheels 7 or the crawler travel devices.

### Configurations of First Planetary Device, Second Planetary Device, and Continuously Variable Transmission Device

As illustrated in Fig. 2, the first planetary device 40 includes a sun gear 41, a ring gear 42, and two or more planetary gears 43, whereas the second planetary device 50 includes a sun gear 51, a ring gear 52, and two or more planetary gears 53 and 54.

The first and second planetary devices 40 and 50 share a carrier 55. The first planetary device 40 is configured such that the planetary gears 43 mesh with the sun gear 41 and the ring gear 42 and are rotatably attached to the carrier 55.

The second planetary device 50 is configured such that the planetary gears 53 and 54 are coupled to each other in such a manner as to be capable of rotating integrally with each other and are rotatably attached to the carrier 55. The planetary gear 54 meshes with the planetary gears 43, whereas the planetary gear 53 meshes with the sun gear 51 and the ring gear 52.

The motive power from the input shaft 17 is transmitted through a power transmission shaft 36 to the ring gear 42 of the first planetary device 40. The motive power of the input shaft 17 is transmitted from a power transmission gear 37, which couples the power transmission shafts 25 and 26 to each other, through a power transmission shaft 38 to the continuously variable transmission device 18.

The continuously variable transmission device 18 is of a hydraulic type, and outputs normal-direction motive power and reverse-direction motive power to be transmitted from an output shaft 39 to the sun gear 41 of the first planetary device 40.

The transmission case 3 contains a hydraulic pump 65 and a charge pump 66 (which are examples of the "hydraulic pump") drivable on the motive power from the power transmission shaft 38. The hydraulic pump 65 is configured to supply operating oil for use by, for example, a hydraulic cylinder 93 (see Fig. 1) for lifting and lowering the link mechanism 13. The charge pump 66 serves to supply operating oil to the continuously variable transmission device 18.

The first and second planetary devices 40 and 50 composite (i) the motive power transmitted from the engine 1 through the continuously variable transmission device 18 to the sun gear 41 of the first planetary device 40 and (ii) the motive power transmitted from the engine 1 not through the continuously variable transmission device 18 to the ring gear 42 of the first planetary device 40.

The motive power composited by the first and second planetary devices 40 and 50 is transmitted from the ring gear 52 of the second planetary device 50 to a cylindrical output shaft 44, from the carrier 55 to a cylindrical output shaft 45, and from the sun gear 51 of the second planetary device 50 to a cylindrical output shaft 46.

### Configuration of Power Transmission Device

As illustrated in Fig. 2, the power transmission device 19 includes first to fourth clutches CL1 to CL4 and an output shaft 27. The first to fourth clutches CL1 to CL4 are of a hydraulic multi-disc type. The first to fourth clutches CL1 to CL4 are each urged to a disengaged state, and become engaged in response to receiving operating oil.

The output shaft 44 includes an output gear 44a meshing with an input gear 61 of the first clutch CL1. The output shaft 46 includes an output gear 46a meshing with an input gear 62 of the second clutch CL2 and an output gear 46b meshing with an input gear 64 of the fourth clutch CL4. The output shaft 45 includes an output gear 45a meshing with an input gear 63 of the third clutch CL3.

In response to the first clutch CL1 becoming engaged, the motive power composited by the first and second planetary devices 40 and 50 is transmitted from the ring gear 52 of the second planetary device 50 through the output gear 44a of the output shaft 44, the input gear 61, and the first clutch CL1 to the output shaft 27.

In response to the second clutch CL2 becoming engaged, the motive power composited by the first and second planetary devices 40 and 50 is transmitted from the sun gear 51 of the second planetary device 50 through the output gear 46a of the output shaft 46, the input gear 62, and the second clutch CL2 to the output shaft 27.

In response to the third clutch CL3 becoming engaged, the motive power composited by the first and second planetary devices 40 and 50 is transmitted from the carrier 55 through the output gear 45a of the output shaft 45, the input gear 63, and the third clutch CL3 to the output shaft 27.

In response to the fourth clutch CL4 becoming engaged, the motive power composited by the first and second planetary devices 40 and 50 is transmitted from the sun gear 51 of the second planetary device 50 through the output gear 46b of the output shaft 46, the input gear 64, and the fourth clutch CL4 to the output shaft 27.

### Outline of Speed Change with Continuously Variable Transmission Device and Power Transmission Device

As illustrated in Fig. 1, the driver section 9 includes a shift pedal 94 that the driver is able to step on to move it between a stop position and a maximum speed position and that is urged toward the stop position. The driver is able to set the shift pedal 94 in one of first-gear to fourth-gear ranges between the stop position and the maximum speed position.

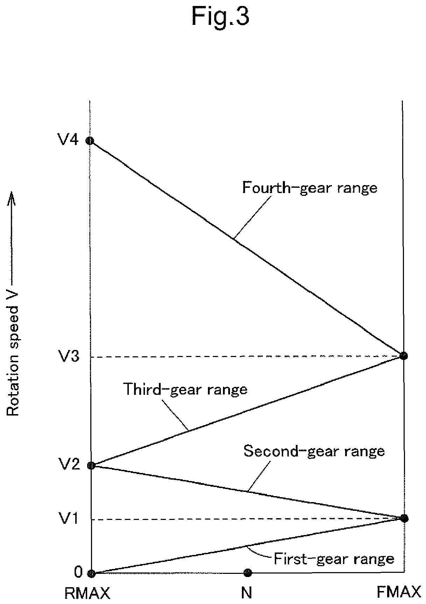

Fig. 3 illustrates how the continuously variable transmission device 18 is related to the first to fourth clutches CL1 to CL4 in the first-gear to fourth-gear ranges. Fig. 3 shows "V" to indicate the rotation speed of the output shaft 27, "N" to indicate the neutral position of the continuously variable transmission device 18, "FMAX" to indicate a forward maximum speed position, and "RMAX" to indicate a reverse maximum speed position.

Stepping on the shift pedal 94 to the stop position, the first-gear to fourth-gear ranges, and the maximum speed position operate the continuously variable transmission device 18 and the first to fourth clutches CL1 to CL4 as described below.

### Speed Change with Continuously Variable Transmission Device and Power Transmission Device

As illustrated in Fig. 3, moving the shift pedal 94 to the stop position disengages the first to fourth clutches CL1 to CL4 to stop the tractor. Stepping on the shift pedal 94 slightly to move it from the stop position to the first-gear range engages the first clutch CL1.

As illustrated in Fig. 2, in response to the first clutch CL1 becoming engaged, the motive power composited by the first and second planetary devices 40 and 50 is transmitted from the ring gear 52 of the second planetary device 50 through the first clutch CL1 to the output shaft 27.

In this state, the shift pedal 94 varies the continuously variable transmission device 18 between RMAX and FMAX to change the rotation speed V of the output shaft 27 continuously between zero speed and a speed V1, as shown with "First-gear range" in Fig. 3.

Stepping on the shift pedal 94 slightly further to move it from the first-gear range to the second-gear range engages the second clutch CL2.

As illustrated in Fig. 2, in response to the second clutch CL2 becoming engaged, the motive power composited by the first and second planetary devices 40 and 50 is transmitted from the sun gear 51 of the second planetary device 50 through the second clutch CL2 to the output shaft 27.

In this state, the shift pedal 94 varies the continuously variable transmission device 18 between RMAX and FMAX to change the rotation speed V of the output shaft 27 continuously between the speed V1 and a speed V2, as shown with "Second-gear range" in Fig. 3.

Stepping on the shift pedal 94 slightly further to move it from the second-gear range to the third-gear range engages the third clutch CL3.

As illustrated in Fig. 2, in response to the third clutch CL3 becoming engaged, the motive power composited by the first and second planetary devices 40 and 50 is transmitted from the carrier 55 through the third clutch CL3 to the output shaft 27.

In this state, the shift pedal 94 varies the continuously variable transmission device 18 between RMAX and FMAX to change the rotation speed V of the output shaft 27 continuously between the speed V2 and a speed V3, as shown with "Third-gear range" in Fig. 3.

Stepping on the shift pedal 94 slightly further to move it from the third-gear range to the fourth-gear range engages the fourth clutch CL4.

As illustrated in Fig. 2, in response to the fourth clutch CL4 becoming engaged, the motive power composited by the first and second planetary devices 40 and 50 is transmitted from the sun gear 51 of the second planetary device 50 through the fourth clutch CL4 to the output shaft 27.

In this state, the shift pedal 94 varies the continuously variable transmission device 18 between RMAX and FMAX to change the rotation speed V of the output shaft 27 continuously between the speed V3 and a speed V4, as shown with "Fourth-gear range" in Fig. 3.

### Configuration of Forward/Rearward Travel Switching Device

As illustrated in Fig. 2, the forward/rearward travel switching device 20 includes a forward-travel clutch CLF, a rearward-travel clutch CLR, and power transmission shafts 28 and 29. The power transmission shaft 28 is provided with the forward-travel clutch CLF and the rearward-travel clutch CLR, and receives motive power from the output shaft 27.

The forward/rearward travel switching device 20 includes power transmission gears 48 and 59 both coupled to the power transmission shaft 29, a power transmission gear 47 coupled to the power transmission shaft 31, and a power transmission gear 60 coupled to the power transmission shaft 31 and meshing with the power transmission gear 59. The power transmission gear 48 meshes with an output gear 96 of the forward-travel clutch CLF. The power transmission gear 47 meshes with an output gear 97 of the rearward-travel clutch CLR.

The forward/rearward travel switching device 20 is configured such that in response to the forward-travel clutch CLF becoming engaged, the motive power from the power transmission shaft 28 is transmitted through the forward-travel clutch CLF, the power transmission gear 48, the power transmission shaft 29, and the power transmission gears 59 and 60 to the power transmission shaft 31 in a forward-travel state and from the power transmission shaft 31 to the rear-wheel differential device 21.

The forward/rearward travel switching device 20 is configured such that in response to the rearward-travel clutch CLR becoming engaged, the motive power from the power transmission shaft 28 is transmitted through the rearward-travel clutch CLR and the power transmission gear 47 to the power transmission shaft 31 in a rearward-travel state and from the power transmission shaft 31 to the rear-wheel differential device 21.

### Configuration of Front-Wheel Transmission Device

As illustrated in Fig. 2, the front-wheel transmission device 22 includes a standard clutch CLT, a speed-increasing clutch CLH, a power transmission shaft 32, and a front-wheel output shaft 33.

The front-wheel transmission device 22 includes a power transmission gear 71 (which is an example of the "first power transmission gear") coupled to the power transmission shaft 31 and a power transmission gear 72 (which is an example of the "second power transmission gear") coupled to the power transmission shaft 32 and meshing with the power transmission gear 71. The power transmission shaft 32 is coupled to the power transmission shaft 30. The motive power from the power transmission shaft 31 is transmitted through the power transmission gears 71 and 72 and the power transmission shaft 32 to the power transmission shaft 30.

Turning each front wheel 6 from its straight-travel position to the left or right at an angle within a predetermined range engages the standard clutch CLT. In this state, the motive power from the power transmission shaft 30 is transmitted through the standard clutch CLT to the front-wheel output shaft 33 and through the power transmission shaft 34 and the front-wheel differential device 35 to the front wheels 6. This drives the front and rear wheels 6 and 7 at the same speed.

Turning each front wheel 6 to the left or right beyond the left or right predetermined range engages the speed-increasing clutch CLH. In this state, the motive power of the power transmission shaft 30 is transmitted through the speed-increasing clutch CLH to the front-wheel output shaft 33 and through the power transmission shaft 34 and the front-wheel differential device 35 to the front wheels 6. This drives the front wheels 6 at a speed higher than the speed at which the rear wheels 7 are driven.

### Outline of Holder

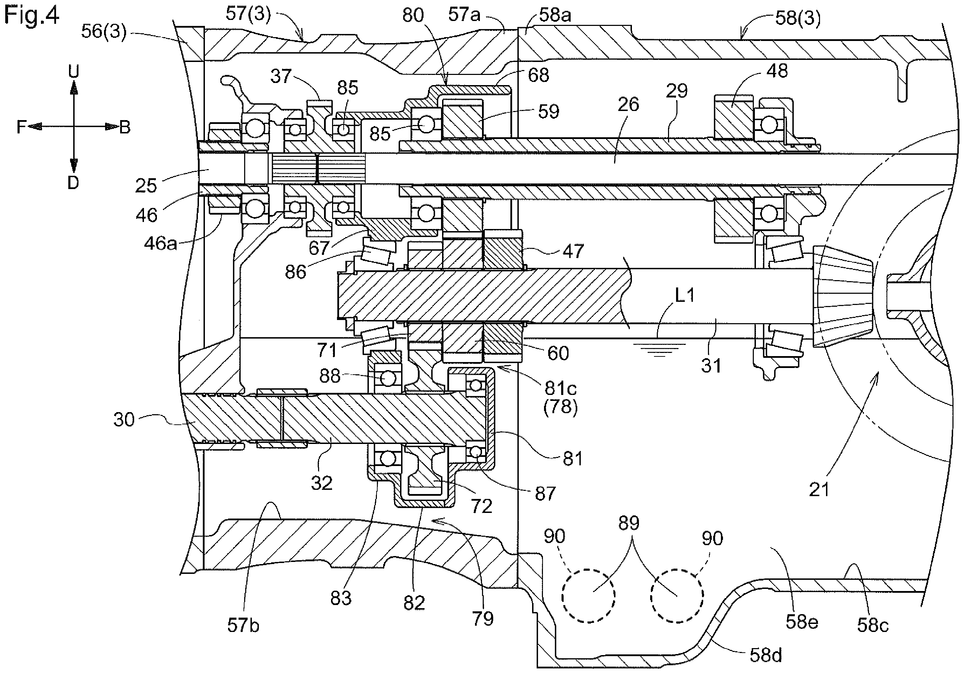

As illustrated in Figs. 2 and 4, the transmission case 3 contains a holder 80 attached therein and holding the power transmission shafts 26, 28, 29, 31, and 32.

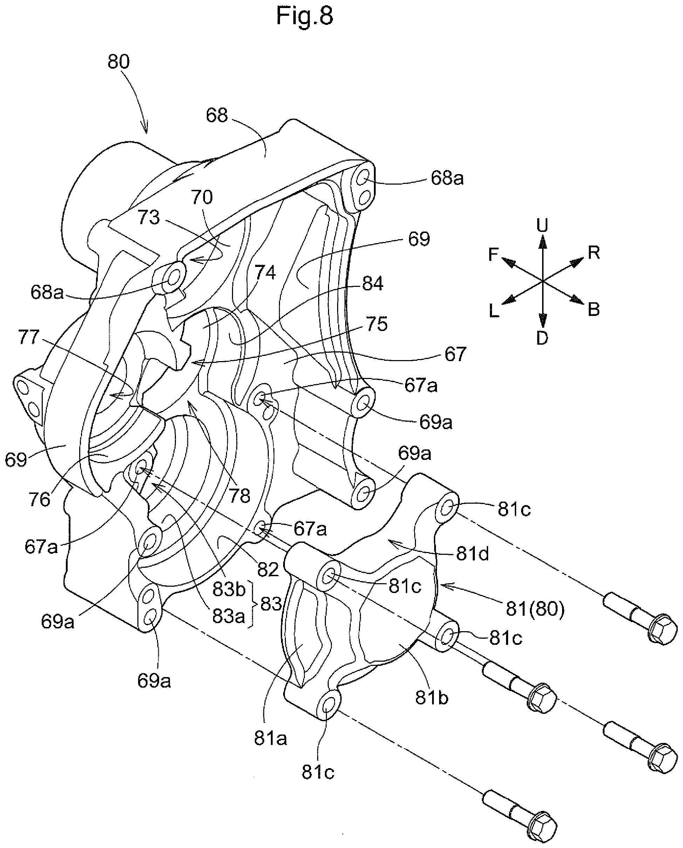

As illustrated in Fig. 8, the holder 80 includes a body 67 and walls 68 and 69 integral with one another and a first cover 81 as a separate member.

### Configuration of Body and Walls of Holder

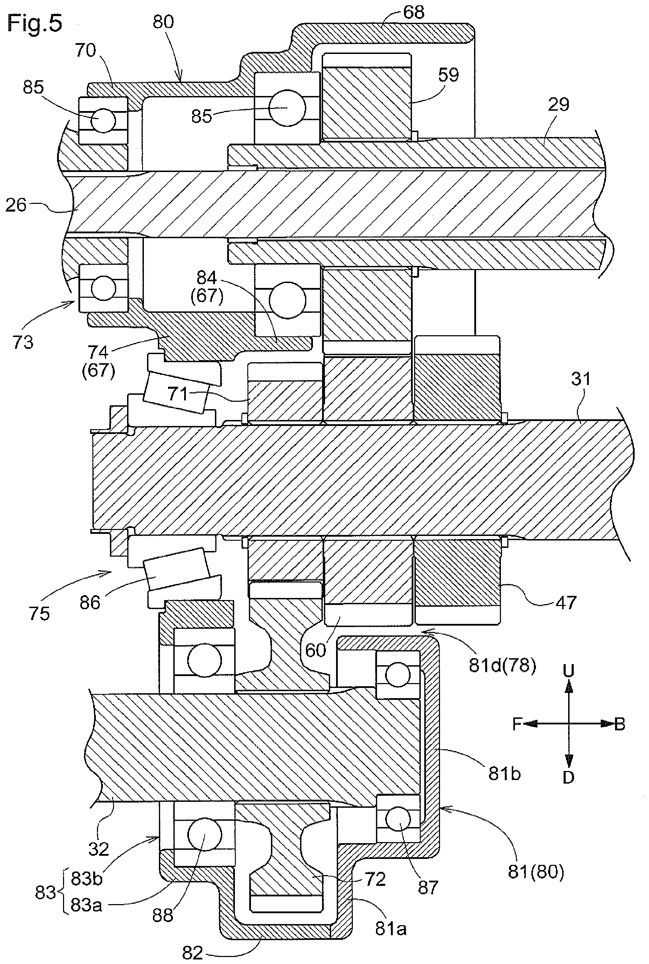

As illustrated in Figs. 5 and 8, the holder 80 is configured such that the body 67 is oriented in the left-right direction and in the up-down direction.

The wall 68 is disposed at an upper end portion of the body 67 and protrudes backward. The left and right walls 69 are disposed at respective left and right end portions of the body 67 and protrude backward. The body 67 is provided with no wall at a lower end portion thereof. The wall 68 includes a pair of left and right attachment sections 68a at respective left and right portions thereof. The walls 69 each include an attachment section 69a at a lower portion thereof.

The body 67 includes a holder section 70 and an opening 73 at an upper portion thereof, and also includes a holder section 76 and an opening 77 at an upper left portion thereof. The holder section 76 has a cutout at a lower right portion thereof, which is adjacent to a fourth cover 84 described later.

The body 67 includes a holder section 74, an opening 75, and a fourth cover 84 at a vertically intermediate portion thereof. The fourth cover 84 is in the shape of a ring (cylinder), and has a cutout at a lower portion thereof.

The body 67 includes a second cover 82 and a third cover 83 at a lower portion thereof. The second cover 82 is in the shape of a ring (cylinder), and has a cutout at an upper portion thereof.

The respective cutouts in the upper portion of the second cover 82 and in the lower portion of the fourth cover 84 serve together as an open portion 78 for both the second and fourth covers 82 and 84.

The third cover 83 is connected to a front portion of the second cover 82, and includes a holder section 83a and an opening 83b (which is an example of the "shaft extending section").

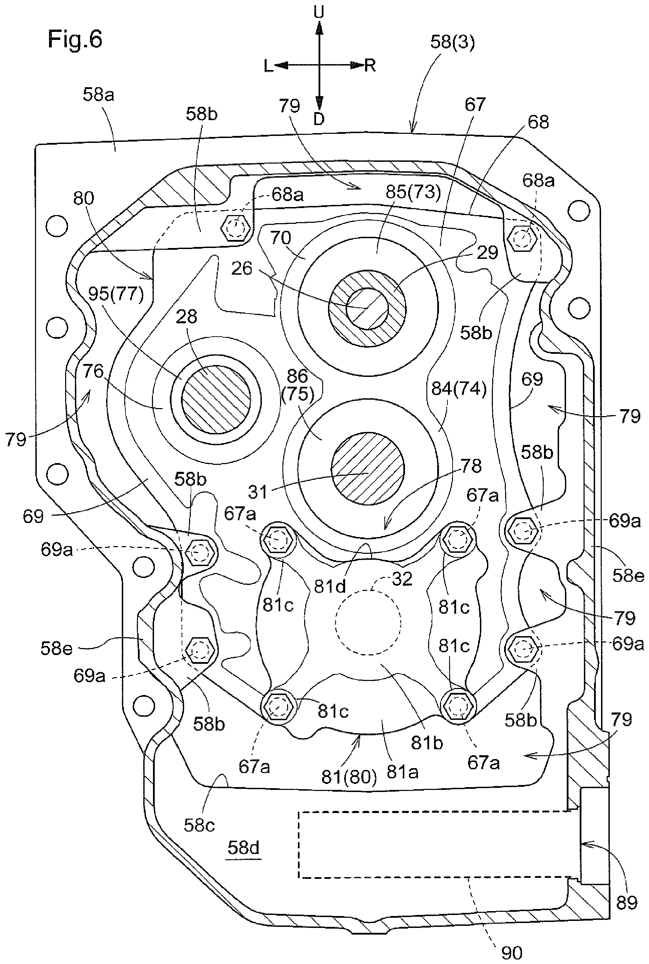

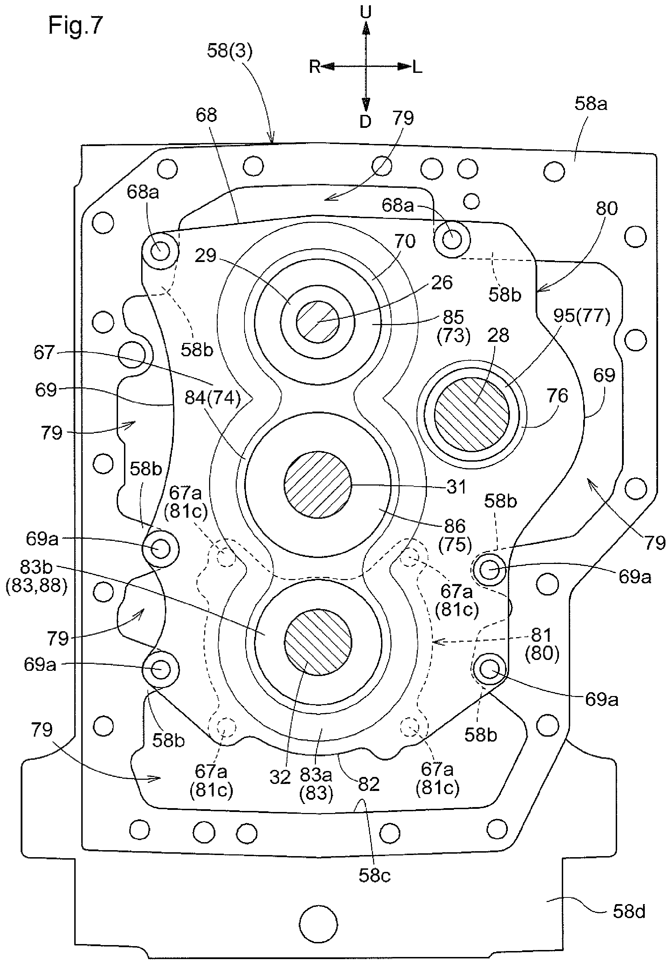

The body 67 includes a pair of left and right attachment sections 67a adjacent to respective upper left and upper right portions of the second cover 82 and another pair of left and right attachment sections 67a adjacent to respective lower left and lower right portions of the second cover 82. If an imaginary line is drawn that connects the upper right and lower left attachment sections 67a, and another imaginary line is drawn that connects the upper left and lower right attachment sections 67a, the two lines cross each other in an X shape in a rear (or front) view (see Figs. 6 and 7).

### Configuration of First Cover of Holder

As illustrated in Figs. 5, 6, and 8, the first cover 81 includes a body 81a, a holder section 81b, and four attachment sections 81c integral with one another. The body 81a is in the shape of a disc provided with a holder section 81b depressed with a bottom portion.

The body 81a has upper left and upper right portions provided with respective attachment sections 81c and lower left and lower right portions provided with respective attachment sections 81c. If an imaginary line is drawn that connects the upper right and lower left attachment sections 81c, and another imaginary line is drawn that connects the upper left and lower right attachment sections 81c, the two lines cross each other in an X shape in a rear (or front) view (see Fig. 6).

The first cover 81 includes an open portion 81d between the upper left and upper right attachment sections 81c (that is, adjacently above the holder section 81b) in which open portion 81d the body 81a is absent.

Bolting the attachment sections 81c of the first cover 81 to the respective attachment sections 67a of the body 67 attaches the first cover 81 to the body 67. The first cover 81 is opposite to the third cover 83 across the second cover 82. The open portion 78 of the second and fourth covers 82 and 84 is adjacent to the open portion 81d of the first cover 81 in the front-rear direction.

### How Holder Is Attached in Transmission Case

As illustrated in Figs. 4, 6, and 7, the intermediate compartment 57 of the transmission case 3 includes a flange 57a around a rear end portion thereof, whereas the back compartment 58 of the transmission case 3 includes a flange 58a around a front end portion thereof, which is bolted to the flange 57a.

The flange 58a includes attachment sections 58b protruding inward of the back compartment 58. The holder 80 is disposed in the transmission case 3 with the attachment sections 68a and 69a of the walls 68 and 69 bolted to the attachment sections 58b.

The holder 80 is coupled to the back compartment 58 and disposed in the intermediate compartment 57 (see Fig. 4). The holder 80 has an outer surface separated from the flanges 57a and 58a by a gap 79 that allows lubricating oil in the transmission case 3 to flow therethrough in the front-rear direction.

### How Holder Holds Power Transmission Shafts

As illustrated in Figs. 4 to 8, the holder 80 has an opening 77 through which the power transmission shaft 28 (see Fig. 2) is disposed and a bearing 95 attached to the holder section 76 and holding the power transmission shaft 28.

The holder 80 has an opening 73 through which the power transmission shafts 26 and 29 (see Fig. 2) are disposed and a bearing 85 attached to the holder section 70 and holding the power transmission shaft 28. The power transmission gear 59 (see Fig. 2) includes gear teeth surrounded by the walls 68 and 69 of the holder 80.

The holder 80 has an opening 75 through which the power transmission shaft 31 (see Fig. 2) is disposed and a bearing 86 attached to the holder section 74 and holding the power transmission shaft 31. The power transmission shaft 31 protrudes rearward from the holder 80.

The power transmission gear 71 (see Fig. 2) includes gear teeth covered by the fourth cover 84 except at the open portion 78 (see Fig. 8). The power transmission gears 60 and 47 (see Fig. 2) mesh with the power transmission gear 59 and the output gear 97, include gear teeth surrounded by the walls 69, and are partially in the open portion 81d (see Fig. 8) of the first cover 81.

The power transmission shaft 32 (see Fig. 2) is inward of the first to third covers 81 to 83. The holder 80 includes a bearing 87 (first bearing) attached to the holder section 81b of the first cover 81 and holding the power transmission shaft 32 and a bearing 88 (second bearing) attached to the holder section 83a of the third cover 83 and holding the power transmission shaft 32. The power transmission shaft 32 is below the power transmission shaft 31 and protrudes forward from the holder 80 through the opening 83b in the third cover 83.

The power transmission gear 72 (see Fig. 2) is inward of the first to third covers 81 to 83. The power transmission gear 72 meshes with the power transmission gear 71 at the open portion 78 (see Fig. 8) of the holder 80.

The power transmission gear 72 has a back face that is opposite to the side toward which the power transmission shaft 32 protrudes and that is covered by the first cover 81. The power transmission shaft 32 has a corresponding end portion also covered by the first cover 81. The power transmission gear 72 includes gear teeth covered by the second cover 82 except at the open portion 78 (see Fig. 8), and has a side portion that corresponds to the side toward which the power transmission shaft 32 protrudes and that is covered by the third cover 83.

The above work vehicle may be further configured such that the first power transmission shaft (that is, the power transmission shaft 31) is a differential drive shaft (that is, the rear-wheel differential device 21) disposed in a front-rear direction and configured to transmit motive power to the rear differential device, and
the second power transmission shaft (that is, the power transmission shaft 32) is a front-wheel power transmission shaft disposed in the front-rear direction and configured to transmit the motive power of the differential drive shaft (that is, the power transmission shaft 31) from the first power transmission gear (that is, the power transmission gear 71) and the second power transmission gear (that is, the power transmission gear 72) to the front wheels 6.

The above work vehicle is further configured such that the second power transmission shaft (that is, the power transmission shaft 32) is below the first power transmission shaft (that is, the power transmission shaft 31), and further includes: a first power transmission gear (that is, the power transmission gear 71) disposed in the transmission case 3 and attached to the first power transmission shaft (that is, the power transmission shaft 31); and a second power transmission gear (that is the power transmission gear 72) disposed in the transmission case 3, attached to an end of the second power transmission shaft (that is, the power transmission shaft 32), and meshing with the first power transmission gear (that is, the power transmission gear 71) at a meshing portion.

The above work vehicle further includes: a first cover 81 covering (i) a portion of the second power transmission gear (that is, the power transmission gear 72) which portion is on a first side opposite to a second side toward which the second power transmission shaft (that is, the power transmission shaft 32) protrudes and (ii) the end of the second power transmission shaft (that is, the power transmission shaft 32).

The above work vehicle further includes: a second cover 82 covering a radially outward portion of the second power transmission gear (that is, the power transmission gear 72) except for the meshing portion.

The above work vehicle may further include: a third cover 83 covering a portion of the second power transmission gear (that is, the power transmission gear 72) which portion is on the second side and including a shaft extending section (that is, the opening 83b) through which the second power transmission shaft (that is, the power transmission shaft 32) extends.

The above work vehicle may further include: a bearing 87 disposed on the first cover 81 and holding the second power transmission shaft (that is, the power transmission shaft 32) in such a manner that the second power transmission shaft (that is, the power transmission shaft 32) is rotatable.

The above work vehicle may further include: a bearing 88 disposed on the third cover 83 and holding the second power transmission shaft (that is, the power transmission shaft 32) in such a manner that the second power transmission shaft (that is, the power transmission shaft 32) is rotatable.

The above work vehicle may further include: a holder 80 holding the first power transmission shaft (that is, the power transmission shaft 31) in such a manner that the first power transmission shaft (that is, the power transmission shaft 31) is rotatable, wherein the first cover 81, the second cover 82, and the third cover 83 are disposed on the holder 80.

### Configuration of System for Supplying Oil to Hydraulic Pump and Charge Pump

As illustrated in Figs. 4, 6, and 7, the transmission case 3 is configured such that the back compartment 58 includes a bottom portion 58c slightly below the bottom portion 57b of the intermediate compartment 57. The bottom portion 58c has a downward depression 58d immediately rearward of the flange 58a.

The back compartment 58 includes on the right a lateral side portion 58e with two intake ports 89 (which is an example of the "intake section") lateral to the depression 58d, arranged in the front-rear direction, and provided with two respective strainers 90 (which is an example of the "intake section") attached thereto and disposed laterally in the depression 58d.

The intake ports 89 and the strainers 90 (as well as the depression 58d) are disposed rearward of the holder 80 and below the holder 80 and the bottom portion 57b, and are separated from the power transmission shafts 28 and 31 by a relatively large space.

The transmission case 3 is so designed to contain lubricating oil that the height of its surface L1 (that is, the oil level) is around the open portion 78 (that is, where the power transmission gears 71 and 72 mesh with each other).

This results in the first to third covers 81 to 83 and the power transmission gear 72 being substantially entirely below the surface L1 of lubricating oil.

As illustrated in Fig. 2, the tractor includes outside the transmission case 3 a supply oil passage 91 connected to the hydraulic pump 65 and one of the intake ports 89 and a supply oil passage 92 connected to the charge pump 66 and the other intake port 89. This allows lubricating oil in the transmission case 3 to flow through the strainers 90, the intake ports 89, and the supply oil passages 91 and 92 into the hydraulic pump 65 and the charge pump 66 as operating oil.

The intake ports 89 and the strainers 90 being in the depression 58d prevents the surface L1 of lubricating oil from being below the intake ports 89 and the strainers 90 and thereby prevents air bubbles from entering the strainers 90 through the intake ports 89 in response to the tractor being tilted.

The above work vehicle may further include: an intake section (that is, the intake ports 89 and the strainers 90) disposed in the transmission case 3 and on the first side of the first cover 81 and configured to take in the lubricating oil and supply the lubricating oil to a hydraulic pump (that is, the hydraulic pump 65 and the charge pump 66).

The above work vehicle may be further configured such that the intake section (that is, the intake ports 89 and the strainers 90) is below respective lower ends of the first cover 81 and the second cover 82.

The above work vehicle may be further configured such that a downward depression 58d in a bottom portion 58c of the transmission case 3 (that is, the back compartment 58), wherein the intake section (that is, the intake ports 89 and the strainers 90) is in the depression 58d.

### First Alternative Embodiment

The holder 80 may omit the third cover 83 to include only the first and second covers 81 and 82.

### Second Alternative Embodiment

The embodiment illustrated in Figs. 2 to 7 is configured such that the power transmission shaft 31 protrudes rearward from the holder 80 and that the power transmission shaft 32 protrudes forward from the holder 80.

The embodiment may be altered such that the power transmission shafts 31 and 32 both protrude rearward or forward from the holder 80.

### Third Alternative Embodiment

The tractor may include a motor (not illustrated in the drawings) instead of the engine 1 as a motive power source.

The tractor may include an engine 1 and a motor in combination as a hybrid motive power source.

### Fourth Alternative Embodiment

The tractor may include crawler travel devices instead of the rear wheels 7 as rear travel devices. The tractor, in this case, includes a pair of left and right front wheels 6 as front travel devices and a pair of left and right crawler travel devices as rear travel devices.

### Fifth Alternative Embodiment

The tractor may include a pair of left and right crawler travel devices instead of the front wheels 6 and another pair of left and right crawler travel devices instead of the rear wheels 7.

In this case, the motive power of the motive power source may be transmitted from the power transmission shaft 31 ("first power transmission shaft") to the power transmission shaft 32 ("second power transmission shaft") and from the power transmission shaft 32 to the crawler travel devices or from the power transmission shaft 32 to the power transmission shaft 31 and from the power transmission shaft 31 to the crawler travel devices.

### Sixth Alternative Embodiment

The transmission case 3 (specifically, the back compartment 58) may omit the depression 58d.

Such an embodiment may be configured such that the intake ports 89 and the strainers 90 are on that side of the first cover 81 which is opposite to the side toward which the power transmission shaft 32 ("second power transmission shaft") protrudes, and are at a height substantially equal to those of the first and second covers 81 and 82 (that is, above the respective lower ends of the first and second covers 81 and 82).

The present invention is applicable to not only tractors but also agricultural work vehicles such as combines and riding-type rice transplanters and construction work vehicles such as backhoes and wheel loaders.

## Claims

1. A work vehicle, comprising:
a motive power source (1);
a travel device (6, 7); and
a first power transmission shaft (31) and a second power transmission shaft (32) each configured to transmit motive power from the motive power source (1) to the at least one travel device (6, 7);
a transmission case (3) containing the first power transmission shaft (31) and the second power transmission shaft (32) and configured to store lubricating oil, the second power transmission shaft (32) being below the first power transmission shaft (31);
a first power transmission gear (71) disposed in the transmission case (3) and attached to the first power transmission shaft (31);
a second power transmission gear (72) disposed in the transmission case (3), attached to an end of the second power transmission shaft (32), and meshing with the first power transmission gear (71) at a meshing portion;
a first cover (81) covering (i) a portion of the second power transmission gear (72) which portion is on a first side opposite to a second side toward which the second power transmission shaft (32) protrudes and (ii) the end of the second power transmission shaft (32); and
a second cover (82) covering a radially outward portion of the second power transmission gear (72) except for the meshing portion.

2. The work vehicle according to claim 1, further comprising:
a first bearing (87) disposed on the first cover (81) and holding the second power transmission shaft (32) in such a manner that the second power transmission shaft (32) is rotatable.

3. The work vehicle according to claim 1 or 2, further comprising:
a third cover (83) covering a portion of the second power transmission gear (72) which portion is on the second side and including a shaft extending section through which the second power transmission shaft (32) extends.

4. The work vehicle according to claim 3, further comprising:
a second bearing (88) disposed on the third cover (83) and holding the second power transmission shaft (32) in such a manner that the second power transmission shaft is rotatable.

5. The work vehicle according to claim 3 or 4, further comprising:
a holder (80) holding the first power transmission shaft (31) in such a manner that the first power transmission shaft (31) is rotatable,
wherein the first cover (81) , the second cover (82) , and the third cover (83) are disposed on the holder (80).

6. The work vehicle according to any one of claims 1 to 5, wherein
the at least one travel device (6, 7) includes:
a pair of left and right front wheels (6); and
a pair of left and right rear wheels (7) or a pair of left and right crawler travel devices,
the work vehicle further comprises:
a rear differential device (21) configured to transmit motive power to the rear wheels (7) or the crawler travel devices,
the first power transmission shaft (31) is a differential drive shaft disposed in a front-rear direction and configured to transmit motive power to the rear differential device (21), and
the second power transmission shaft (32) is a front-wheel power transmission shaft disposed in the front-rear direction and configured to transmit the motive power of the differential drive shaft from the first power transmission gear (71) and the second power transmission gear (72) to the front wheels (6).

7. The work vehicle according to any one of claims 1 to 6, further comprising:
an intake section (89, 90) disposed in the transmission case (3) and on the first side of the first cover (81) and configured to take in the lubricating oil and supply the lubricating oil to a hydraulic pump (65, 66).

8. The work vehicle according to claim 7, wherein
the intake section (89, 90) is below respective lower ends of the first cover (81) and the second cover (82).

9. The work vehicle according to claim 8, further comprising:
a downward depression (58d) in a bottom portion of the transmission case (3),
wherein the intake section (89, 90) is in the depression (58d).
